Europäisches Patentamt

European Patent Office

Office européen des brevets

(11) Veröffentlichungsnummer: **0 139 806 B1**

# (12) EUROPÄISCHE PATENTSCHRIFT

(45) Veröffentlichungstag der Patentschrift:
24.08.88

(21) Anmeldenummer: 83810613.6

(22) Anmeldetag: 22.12.83

(51) Int. Cl.⁴: **B 01 D 13/04,** B 01 D 39/00,
B 01 D 13/00, C 12 M 1/12

(54) Verfahren zur Herstellung eines Filters, nach dem Verfahren hergestelltes Filter, sowie eine Vorrichtung zur Herstellung des Filters.

(30) Priorität: **12.07.83 CH 3816/83**

(43) Veröffentlichungstag der Anmeldung:
**08.05.85 Patentblatt 85/19**

(45) Bekanntmachung des Hinweises auf die Patenterteilung:
**24.08.88 Patentblatt 88/34**

(84) Benannte Vertragsstaaten:
**DE FR GB SE**

(56) Entgegenhaltungen:
**EP - A - 0 039 179**
**DE - A - 2 051 237**
**DE - A - 3 013 357**
**DE - B - 1 060 355**
**DE - C - 351 084**
**FR - A - 797 668**
**FR - A - 1 194 271**
**FR - A - 2 079 943**
**FR - A - 2 309 271**
**FR - A - 2 336 962**
**GB - A - 134 116**
**GB - A - 2 011 796**
**US - A - 2 714 578**
**US - A - 3 657 113**
**US - A - 3 692 087**
**US - A - 4 214 994**

**CHEM. TECHNOLOGY, Januar 1972, Seiten 56-71, Washington, USA; M.C. PORTER et al.: "Membrane ultrafiltration"**

(73) Patentinhaber: **GEBRÜDER SULZER AKTIENGESELLSCHAFT, Zürcherstrasse 9, CH-8401 Winterthur (CH)**

(72) Erfinder: **Rebsamen, Ernst Edwin, Dorfstrasse 18, CH-8800 Thalwil (CH)**

(74) Vertreter: **Dipl.-Ing. H. Marsch Dipl.-Ing. K. Sparing Dipl.-Phys.Dr. W.H. Röhl Patentanwälte, Rethelstrasse 123 Postfach 14 02 68, D-4000 Düsseldorf (DE)**

**Beschreibung**

Die Erfindung betrifft ein Filter, ein Verfahren zur Herstellung des Filters, sowie eine Vorrichtung zur Durchführung des Verfahrens.

Filter, bestehend aus einem durchlässigen Abstützkörper und einem Filtertuch, sind an sich bekannt. Es sind auch Filter bekannt, welche einen sinterartigen Abstützkörper mit einer aufgeklebten durchlässigen Filtermembran aufweisen. Falls diese Filter jedoch bei hoher mechanischer und dynamischer Beanspruchung angewendet werden, wie z.B. beschrieben von W. Tobler im Artikel «Dynamische Filtration; das apparative Konzept des Escher-Wyss Druckfilters», Escher-Wyss Mitteilungen, Band 51/52 (1978/79), H. 2/1, weisen sie den Nachteil einer unzureichenden Festigkeit auf. Insbesondere bei hohen Drehzahlen der bei dieser dynamischen Filtration eingesetzten Rotationsfilter können die aufgespannten bzw. aufgeklebten Filtertücher oder Membrane reissen. Auch die Regenerierbarkeit dieser Filter ist unbefriedigend, da bei der Rückspülung die Filtertücher bzw. Filtermembrane sich leicht ablösen. Hierdurch entstehen Betriebsunterbrüche und hohe Kosten da die Filter öfters ersetzt werden müssen.

Aufgabe der Erfindung ist demgegenüber die Schaffung eines Filters, welches auch bei sehr grosser dynamischer Beanspruchung ausreichende Festigkeit besitzt und ohne nennenswerte Verschlechterung seiner Betriebseigenschaften wiederholt regenerierbar ist.

Das Filter, welches zur Lösung dieser Aufgabe dient, und aus einem porösen Grundmaterial und einem Aufbaumaterial besteht, zwischen denen eine Verbundstruktur besteht, wobei sich das Aufbaumaterial wenigstens teilweise in den Poren des Grundmaterials befindet, ist dadurch gekennzeichnet, dass das Aufbaumaterial aus einem wenigstens eine Filtermembran aus Kunststoff und eine Tragstruktur aus Kunststoff aufweisenden Laminat besteht, dessen Tragstruktur in den Poren des Grundmaterials verankert ist.

Das Verfahren zur Herstellung des aufgabengemässen Filters, wobei ein poröses Grundmaterial mit wenigstens einem Aufbaumaterial in Kontakt gebracht und durch Wärme und Druck eine Verbundstruktur zwischen dem Grundmaterial und dem sich wenigstens teilweise in den Poren desselben befindlichen Aufbaumaterials hergestellt wird, ist dadurch gekennzeichnet, dass als Aufbaumaterial ein wenigstens eine Filtermembran aus Kunststoff und eine Tragstruktur aus Kunststoff aufweisendes Laminat verwendet und die Verbundstruktur mit der sich wenigstens teilweise in den Poren des Grundmaterials befindlichen Tragstruktur erzeugt wird.

Hierdurch lässt sich auch bei Filterkörpern mit komplexer Oberflächenkonfiguration eine praktisch homogene Verbundstruktur mit gleichmässiger Porengrösse und hoher mechanischer Festigkeit erzielen. Insbesondere bei dynamischer Filtration lassen sich hohe Umfangsgeschwindigkeiten und grosse Filtrationsdrücke erreichen.

Das Filter kann bei der Filtration von biologischen Materialien enthaltenden Suspensionen zur Anwendung gelangen. Hierbei ist insbesondere die Möglichkeit der Sterilisierung des Filters von Vorteil.

Eine besonders vorteilhafte Anwendung des Filters ergibt sich in einer kontinuierlich betriebenen biologisch katalysierten Reaktion. Dabei ergibt sich gegenüber herkömmlichen Verfahren mit Zentrifugaldekantern der Vorteil eines wesentlich besseren Trenneffekts, so dass auf die bisher erforderliche zweite Klärstufe verzichtet werden kann.

Gemäss dem Verfahren zur Herstellung des erfindungsgemässen Filters lassen sich besonders vorteilhaft grossflächige Filterbahnen erzeugen, welche nachher in beliebige Form gebracht werden können. Dabei kann das Aufbaumaterial durch Anschmelzen oder Anlösen der Tragstruktur und/oder des Grundmaterials mit dem Grundmaterial verbunden werden. Hierdurch wird eine besonders feste mechanische Bindung zwischen Tragstruktur und Grundmaterial erzielt, ohne dass die Filtereigenschaften der Filtermembran beeinträchtigt werden.

Die Vorrichtung zur Durchführung des Verfahrens weist Materialzufuhrmittel für Grundmaterial, Filtermembran und Tragstruktur, Heiz- oder Benetzungswalzen, einen Konditionierungskanal, Presswalzen sowie Press- und Kühl- oder Press- und Trocknungswalzen auf. Hierdurch lassen sich die genannten Filterbahnen besonders vorteilhaft kontinuierlich erzeugen.

Die nähere Erläuterung der Erfindung erfolgt anhand von Ausführungsbeispielen in Verbindung mit nachstehender Zeichnung. Es zeigen:

Fig. 1 eine erste Ausführung des erfindungsgemässen Filters,

Fig. 2 und 3 verschiedene Oberflächenkonfigurationen des Filters,

Fig. 4a, 4b Detailstrukturen des Filters gemäss Fig. 1 in vergrösserter Darstellung,

Fig. 5 ein Anwendungsbeispiel des erfindungsgemässen Filters in einer enzymatisch katalysierten biologischen Reaktion, in schematischer Darstellung, und

Fig. 6 eine Vorrichtung zur Herstellung des Filters.

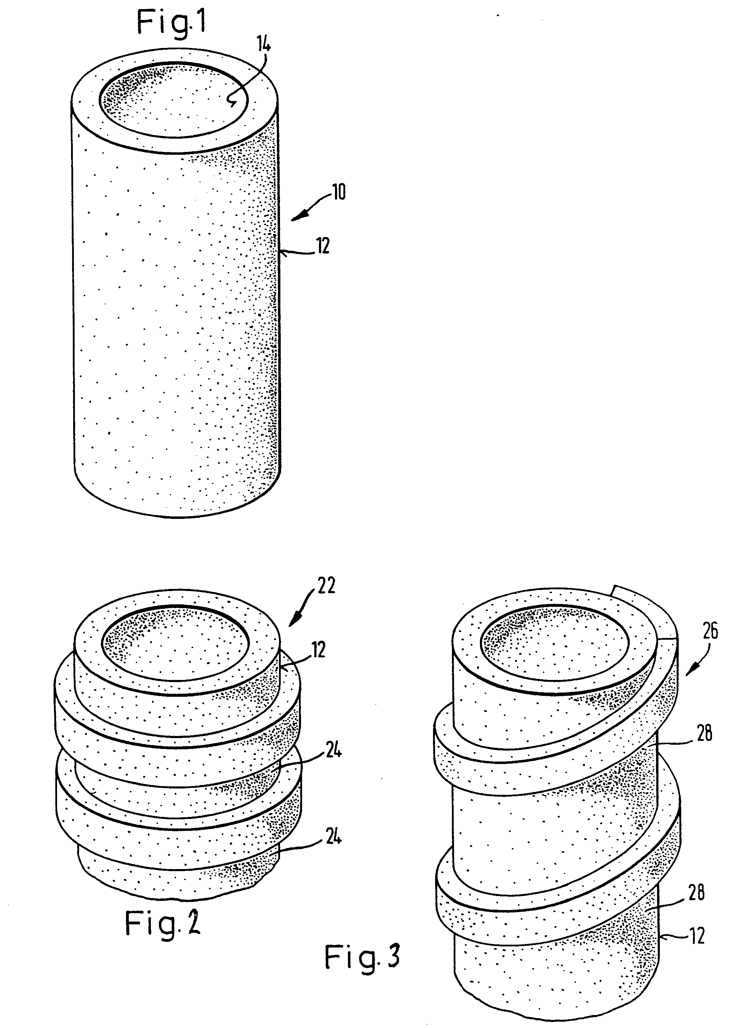

Ein zylindrischer Sinterkörper 10 (Fig. 1) hat eine zylindrische Aussenfiltrationsfläche 12 und eine entsprechende Innenfiltrationsfläche 14 und weist ein gesintertes, poröses Gefüge aus rostfreien Stahlpartikeln mit verhältnismässig grossen Hohlräumen bzw. Poren in der Grössenordnung ca. 0,05 bis 0,25 mm auf.

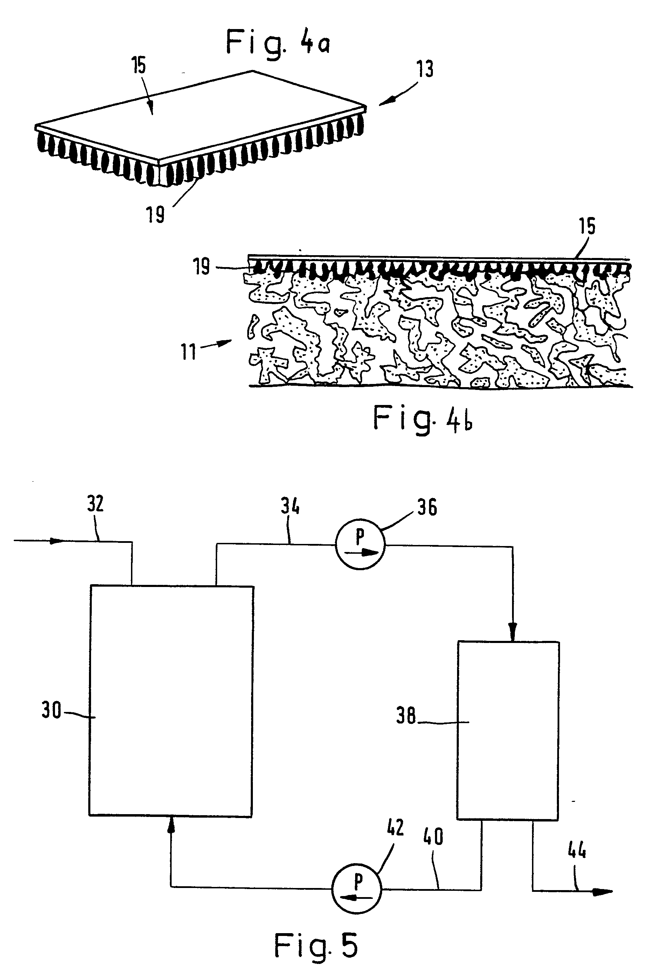

Für ein erstes Beispiel (Fig. 4a, 4b) des erfindungsgemässen Verfahrens wird ein aus rostfreien Stahlpartikeln bestehender plattenförmiger Sinterkörper 11 mit einem Polytetrafluoräthylen (PTFE) aufweisenden Filterlaminat 13 verbunden, dessen PTFE-Membran mit ca. 0,2 μm Porengrösse in an sich bekannter Art auf einem gewobenen Trägermaterial 19 aus Polypropylen (Fig. 4a) aufgebracht worden ist. Der Sinterkörper 11 (Fig. 4b) wird auf eine Temperatur von ca. 170 °C erhitzt, welche der Plastifizierungstemperatur des Trägermaterials 19 entspricht. Dies kann, je nach Grösse, Form und Materialzusammensetzung in einem Ofen bzw. mittels Heizplatten oder Heizwalzen, etc. geschehen. Die zu erreichende Temperatur und deren Beibehaltung während des Pressvorganges wird mittels Thermoelementen gemessen und entsprechend gesteuert und reguliert. Nach Erreichen der Plastifizierungstemperatur des als Trägermaterial dienenden Polypropylengewebes wird durch Aufbringen eines Pressdruckes ein Eindringen des teilweise plastifizierten Trägermaterials in die poröse Struktur des Sinterkörpers 11 und damit eine feste mechanische Verankerung in diesem erreicht. Diezur Anwendung gelangenden Pressdrücke bewegen sich im Bereich von ca. 0,2 bar bis ca. 50 bar (1 bar = $1{,}0 \times 10^5$ Pa) und werden grössen- und formabhängig mittels Walzen, Stempel, Pressbalken, etc. aufgebracht. Die Anpressdauer variiert dabei von ca. 0,5 Sekunden bis ca. 5 Minuten. Nachdem eine innige Verbindung zwischen Grundmaterial und Filterlaminat erzielt worden ist, wird das fertige Filterelement durch Regelung des Temperaturgradienten abgekühlt, wobei eine kraftschlüssige Verankerung erreicht wird.

Für ein zweites Beispiel des erfindungsgemässen Verfahrens wird der Grundkörper 11 und/oder das Filterlaminat 13 gemäss dem ersten Beispiel dergestalt mit auf ca. 80–100 °C erhitztem Xylol als Lösungsmittel benetzt, dass das Trägermaterial an der nachherigen Kontaktstelle plastifiziert oder angelöst wird. Durch entsprechenden Anpressvorgang, verbunden mit einem anschliessenden Trocknungsvorgang zur Entfernung des Lösungsmittels, wird wiederum eine kraftschlüssige Verankerung erreicht.

Bei der Ausführung gemäss Fig. 2 weist der Filterkörper 22 ringförmige Umfangsnuten 24 auf, wodurch eine wesentliche Vergrösserung der Oberfläche der Aussenfiltrationsfläche 12 gewährleistet ist.

Bei der Ausführung gemäss Fig. 3 weist der Filterkörper 26 spiralförmige Nuten 28 auf. Hierdurch wird eine zusätzliche Förderung des Filterkuchens in Axialrichtung erzielt.

Es versteht sich, dass die Aussenfiltrationsfläche auch z.B. in Axialrichtung verlaufende Nuten aufweisen kann.

Beim Anwendungsbeispiel gemäss Fig. 5 wird einem Fermenter 30 eine Nährlösung über die Leitung 32 zugeführt. Die Fermentationsbrühe wird über die Leitung 34 mittels der Pumpe 36 einem dynamischen Druckfiltrationsapparat 38 gemäss der obengenannten Literaturstelle zugeführt, welcher ein nach dem erfindungsgemässen Verfahren hergestelltes Filter enthält. Das eingedickte Zell-Konzentrat wird über die Leitung 40 mittels der Pumpe 42 zum Fermenter 30 kontinuierlich wieder zurückgeführt. Die klare Fermentationsbrühe wird über die Leitung 44 abgeführt. Dabei lassen sich in einer Verfahrensstufe praktisch 100% der zugeführten Zellmenge zurückführen, während der mit herkömmlichen Zentrifugaldekantern erreichbare Trenneffekt lediglich ca.

95% beträgt, was die Nachschaltung zusätzlicher Klärstufen nötig macht. Zudem ist die Verweilzeit im dynamischen Druckfilter wesentlich kürzer, was sich vorteilhaft auf das biologische Verhalten der Zellen auswirkt, da während des Klärverfahrens keine Zugabe von Nährlösung und gegebenenfalls Sauerstoff erfolgen kann. Analog können Enzymkonzentrate zurückgeführt werden bei Anwendung eines Filters im Ultrafiltrationsbereich. Es versteht sich, dass der Filterkörper auch z.B. plattenförmig sein kann.

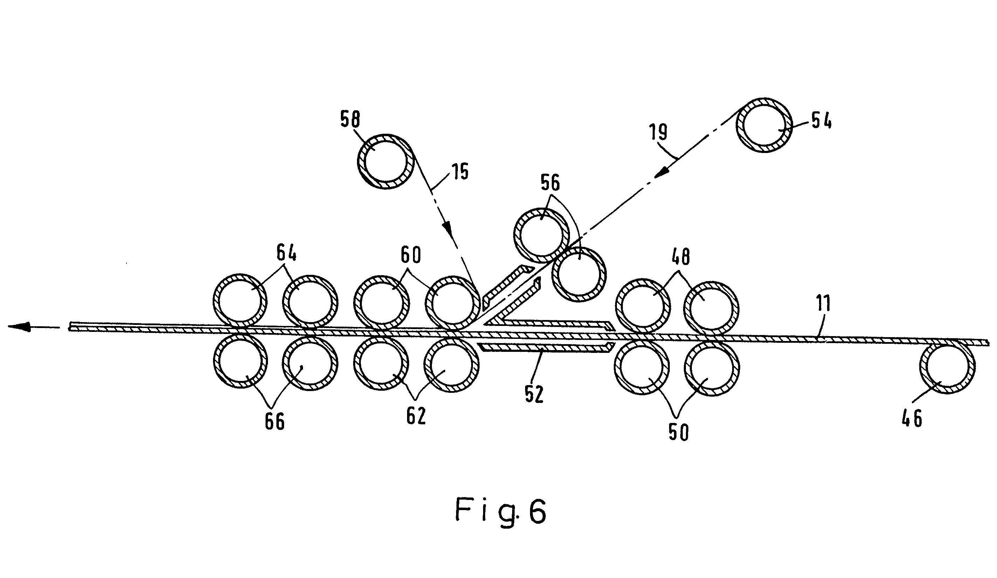

Die Vorrichtung gemäss Fig. 6 zur Herstellung des Filters gemäss Fig. 4b weist eine Zufuhrwalze 46 für plattenförmiges, aus rostfreien Stahlpartikeln gesintertes Grundmaterial 11 auf. Dieses wird zwischen oberen bzw. unteren Heizwalzen 48 bzw. 50 durch den Konditionierungskanal 52 geführt, in welchem die Temperatur mit Hilfe von nicht dargestellten Thermostaten konstant gehalten werden kann. Von der Vorratsrolle 54 wird als Trägermaterial 19 dienendes Polypropylengewebe durch die Heizwalzen 56 zugeführt, während von der Vorratsrolle 58 die PTFE-Membran 15 zugeführt wird. Die drei Bahnen 11, 15, 19 werden anschliessend zwischen den oberen bzw. unteren Presswalzen 60 bzw. 62 miteinander verbunden und schliesslich durch die oberen bzw. unteren Press- und Kühlwalzen 64 bzw. 66 auf Raumtemperatur gebracht.

Bei der Durchführung des Verfahrens mit Lösungsmittel gemäss vorgenanntem zweiten Beispiel werden die Heizwalzen 48, 50 durch Benetzungswalzen ersetzt, während die Press- und Kühlwalzen 64, 66 durch Press- und Trocknungswalzen ersetzt werden.

Es versteht sich, dass das Grundmaterial 11 auch beidseitig mit Filterlaminat verbunden werden kann.

**Patentansprüche**

1. Filter, insbesondere für Rotationsfiltriereinrichtungen, aus einem porösen Grundmaterial (11) und einem Aufbaumaterial (13), zwischen denen eine Verbundstruktur besteht, wobei sich das Aufbaumaterial (13) wenigstens teilweise in den Poren des Grundmaterials (11) befindet, dadurch gekennzeichnet, dass das Aufbaumaterial (13) aus einem wenigstens eine Filtermembrane (15) aus Kunststoff und eine Tragstruktur (19) aus Kunststoff aufweisenden Laminat besteht, dessen Tragstruktur (19) in den Poren des Grundmaterials (11) verankert ist.

2. Verfahren zur Herstellung eines Filters, insbesondere für Rotationsfiltriervorrichtungen, wobei ein poröses Grundmaterial (11) mit wenigstens einem Aufbaumaterial (13) in Kontakt gebracht und durch Wärme und Druck eine Verbundstruktur zwischen dem Grundmaterial (11) und dem sich wenigstens teilweise in den Poren desselben befindlichen Aufbaumaterial (13) hergestellt wird, dadurch gekennzeichnet, dass als Aufbaumaterial (13) ein wenigstens eine Filtermembran (15) aus Kunststoff und eine Tragstruktur (19) aus Kunststoff aufweisendes Laminat verwendet und die Verbundstruktur mit der sich wenigstens teilweise in den Poren des Grundmaterials (11) befindlichen Tragstruktur (19) erzeugt wird.

3. Verfahren nach Anspruch 2, dadurch gekennzeichnet, dass die Verbundstruktur durch Anschmelzen der Tragstruktur und/oder des Grundmaterials (11) gebildet wird.

4. Verfahren nach Anspruch 2, dadurch gekennzeichnet, dass die Verbundstruktur durch Anlösen der Tragstruktur (19) und/oder des Grundmaterials (11) gebildet wird.

5. Vorrichtung zur Durchführung des Verfahrens nach Anspruch 2, gekennzeichnet durch Materialzufuhrmittel (46, 58, 54) für Grundmaterial (11), Filtermembran (15) und Tragstruktur (19), Heiz- oder Benetzungswalzen (48, 50, 56), einen Konditionierungskanal (52), Presswalzen (60, 62) sowie Press- und Kühl- oder Press- und Trocknungswalzen (64, 66).

**Claims**

1. A filter, more particularly for rotation filtration devices, consisting of a porous substrate material (11) and a build-up material (13), between which there is a bonding structure, the build-up material being situated at least partially in the pores of the substrate material (11), characterised in that the build-up material (13) consists of a laminate comprising at least one filter membrane (15) of plastics and a carrying structure (19) of plastics, the carying structure (19) being anchored in the pores of the substrate material (11).

2. A process for the production of a filter, more particularly for rotational filtration devices, a porous substrate material (11) being brought into contact with at least one build-up material (13) and a bonding structure being produced by heat and pressure between the substrate material (11) and the build-up material (13) situated at least partially in the pores thereof, characterised in that the build-up material (13) used is a laminate comprising at least one filter membrane of plastics and a carrying structure (19) of plastics and the bonding structure is produced with the carrying structure (19) situated at least partially in the pores of the substrate material (11).

3. A process according to Claim 2, characterised in that the bonding structure is formed by fusing the carrying structure and/or the substrate material (11).

4. A process according to Claim 2, characterised in that the bonding structure is formed by dissolving the carrying structure and/or the substrate material (11).

5. Apparatus for performing the process according to Claim 2, characterised by material feed means (46, 58, 54) for substrate material (11), filter membrane (15) and carrying structure (19), heating or wetting rollers (48, 50, 56), a conditioning channel (52), pressing rollers (60, 62) and pressing and cooling or pressing and drying rollers (64, 66).

**Revendications**

1. Filtre, en particulier pour dispositifs de filtration rotatifs, composé d'une matière de base poreuse (11) et d'une matière de montage (13), entre lesquelles se situe une structure composite, la matière de montage (13) se trouvant, partiellement au moins, dans les pores de la matière de base (11), caractérisé en ce que la matière de montage (13) est constituée d'un stratifié présentant au moins une membrane filtrante (15) et une structure de support (19), toutes deux en matière synthétique, la structure de support (19) du stratifié étant ancrée dans les pores de la matière de base (11).

2. Procédé pour fabriquer un filtre, en particulier pour des dispositifs de filtration rotatifs, dans lequel une matière de base poreuse (11) est mise en contact avec au moins une matière de montage (13) et, par chaleur et pression, on fabrique une structure composite entre la matière de base (11) et la matière de montage (13) se trouvant, partiellement au moins, dans les pores de la matière de base, caractérisé en ce que la matière de montage utilisée (13) est un stratifié filtrant présentant au moins une membrane filtrante (15) et une structure de support (19), toutes deux en matière synthétique, et en ce que la structure composite est réalisée avec la structure de support (19) se trouvant, partiellement au moins, dans les pores de la matière de base (11).

3. Procédé selon la revendication 2, caractérisé en ce que la structure composite est réalisée par fusion de la structure de support et/ou de la matière de base (11).

4. Procédé selon la revendication 2, caractérisé en ce que la structure composite est réalisée par dissolution de la structure de support (19) et/ou de la matière de base (11).

5. Dispositif pour la mise en œuvre du procédé selon la revendication 2, caractérisé par des organes d'alimentation (46, 58, 54) en une matière de base (11), une membrane filtrante (15) et une structure de support (19), des rouleaux de chauffage ou de mouillage (48, 50, 56), un canal de conditionnement (52), des rouleaux de compression (60, 62), ainsi que des rouleaux de compression et de refroidissement ou de compression et de séchage (64, 66).

# Fig.1

# Fig.2

# Fig.3

# Fig. 4a

# Fig. 4b

# Fig. 5

Fig. 6

0 139 806